# FASCICULE DE BREVET EUROPEEN

(11) **EP 2 483 565 B1**
(45) Date de publication et mention de la délivrance du brevet: **06.01.2016**
(21) Numéro de dépôt: 10768209.8
(22) Date de dépôt: 01.10.2010
(51) Int. Cl.: F04D 29/32, F01D 5/14, F04D 29/66

(54) **ROTOR D'UN COMPRESSEUR DE TURBOMACHINE A PAROI D'EXTREMITE INTERNE OPTIMISEE**
ROTOR EINES TURBOMASCHINENKOMPRESSORS MIT OPTIMIERTER INNENENDWAND
ROTOR OF A TURBOMACHINE COMPRESSOR, WITH AN OPTIMISED INNER END WALL

(30) Priorité: 02.10.2009 FR 0956891
(43) Date de publication de la demande: 08.08.2012
(73) Titulaire: Snecma, 75015 Paris (FR); Cenaero, 6041 Gosselies (BE)
(72) Inventeur: BOSTON, Eric, Jacques, F-77240 Cesson (FR); CHARTOIRE, Alexandre, Franck, Arnaud, F-75012 Paris (FR); ILIOPOULOU, Vasiliki, B-1050 Ixelles (BE); LEPOT, Ingrid, B-4557 Fraiture-en-Condroz (BE); OBRECHT, Thierry, Jean-Jacques, F-77000 Melun (FR)
(74) Mandataire: Ilgart, Jean-Christophe
(86) Numéro de dépôt international: PCT/EP2010/064652
(87) Numéro de publication internationale: WO 2011/039352

(56) Documents cités:
- EP-A1- 1 760 257
- EP-A2- 1 681 438
- EP-A2- 1 762 700
- WO-A1-2008/120748

## Description

### DOMAINE TECHNIQUE

La présente invention se rapporte aux compresseurs des turbomachines, en particulier pour aéronefs, et elle concerne plus particulièrement une paroi d'extrémité interne d'une veine d'écoulement d'un flux primaire de gaz au niveau d'un rotor dans un tel compresseur.

### ÉTAT DE LA TECHNIQUE ANTÉRIEURE

Un compresseur de turbomachine comprend en général plusieurs étages de compression successifs, formés chacun d'un rotor comprenant un disque aubagé rotatif, et d'un stator comprenant une rangée annulaire d'aubes statiques destinées à redresser et guider le flux de gaz s'écoulant dans le compresseur.

Un problème se pose dans le cas des compresseurs dans lesquels l'écoulement des gaz est supersonique par rapport à une partie radialement externe de certaines aubes, notamment celles du rotor du premier étage du compresseur, c'est-à-dire de son étage de compression le plus en amont, l'étendue radiale de la partie des aubes fonctionnant en régime supersonique dépendant de la vitesse de déplacement de ces aubes.

Les chocs supersoniques qui en résultent pénalisent les performances énergétiques des compresseurs, et donc celles des turbomachines équipées de ces compresseurs.

### EXPOSÉ DE L'INVENTION

L'invention a notamment pour but d'apporter une solution simple, économique et efficace à ce problème.

Elle propose à cet effet un rotor d'un compresseur de turbomachine, comprenant un disque de rotor qui porte des aubes présentant chacune une surface d'extrados et une surface d'intrados, le disque étant pourvu à son extrémité radialement externe d'une paroi formant l'extrémité interne d'un canal annulaire d'écoulement d'un flux primaire de gaz dans la turbomachine, cette paroi étant formée d'une pluralité de secteurs angulaires, dont chacun est délimité entre la surface d'extrados d'une première aube et la surface d'intrados d'une seconde aube directement consécutive de ladite première aube selon une direction circonférentielle, chacun desdits secteurs comportant une partie bombée convexe selon la direction axiale et selon la direction circonférentielle qui présente un sommet situé radialement à l'extérieur par rapport à une surface fictive de révolution autour de l'axe dudit disque de rotor et passant par quatre points définis par l'intersection de ladite paroi avec respectivement, le bord d'attaque de chacune desdites première et seconde aubes, et le bord de fuite de chacune desdites aubes, ledit sommet étant écarté circonférentiellement de la surface d'extrados de ladite première aube d'une distance comprise entre 30% et 70% de la distance circonférentielle entre lesdites surfaces d'extrados et d'intrados desdites aubes mesurée au niveau dudit sommet, ladite paroi comportant en outre, en amont de ladite partie bombée, une partie creuse concave selon la direction axiale. Un tel compresseur de turbomachine est décrit dans le document EP 1 762 700 A2.

Selon l'invention, ladite partie creuse est également concave selon la direction circonférentielle et présente un fond sensiblement ponctuel.

La surface fictive précitée forme une surface de référence à partir de laquelle la partie bombée de la paroi d'extrémité interne peut être définie.

La conformation de chaque secteur de la paroi d'extrémité interne permet de réduire l'intensité du choc supersonique dû à l'écoulement gazeux le long des aubes portées par le disque de rotor, et ce d'une manière globale sur toute l'étendue radiale d'une partie radialement externe de ces aubes où se produit un tel choc.

La convexité de la partie bombée de chaque secteur de ladite paroi, à la fois selon la direction axiale et selon la direction circonférentielle, permet notamment de limiter les risques de décollements du flux gazeux le long des surfaces des aubes délimitant ledit secteur, de nature à réduire les performances du rotor. En effet, la partie bombée induit, en aval de son sommet, une décélération du flux gazeux s'écoulant entre les deux aubes précitées. La convexité de la partie bombée permet de localiser cette décélération à distance des surfaces des aubes, et donc de limiter, voire d'éviter, les conséquences néfastes d'une telle décélération lorsqu'elle affecte le flux gazeux le long de ces surfaces.

La partie creuse de chaque secteur de ladite paroi permet d'augmenter l'étendue radiale du canal annulaire en amont de la partie bombée, et d'accentuer la pente formée en amont du sommet de cette partie bombée sur la paroi d'extrémité interne, ce qui contribue à la réduction de l'intensité du choc supersonique, notamment en permettant une réduction du nombre de Mach maximal le long de la surface d'extrados délimitant ledit secteur de la paroi d'extrémité interne, et cela sur toute l'étendue radiale de la surface d'extrados précitée.

D'une manière générale, l'invention permet ainsi d'améliorer les performances énergétiques globales d'un rotor de compresseur de turbomachine.

La concavité de ladite partie creuse de chaque secteur de la paroi d'extrémité interne selon la direction circonférentielle permet de limiter considérablement l'augmentation, non souhaitable, du débit du flux gazeux admis par l'étage de rotor, du fait de l'augmentation de l'étendue radiale du canal annulaire provoquée par la partie creuse.

A cet effet, le fond de la partie creuse de chaque secteur de la paroi d'extrémité interne est de préférence écarté circonférentiellement de la surface d'extrados de ladite première aube d'une distance comprise entre 30% et 70% de la distance circonférentielle entre lesdites surfaces d'extrados et d'intrados des aubes précitées, mesurée au niveau dudit fond.

En outre, le fond de la partie creuse de chaque secteur de la paroi d'extrémité interne est de préférence situé radialement à l'intérieur par rapport à la surface fictive précitée.

La paroi d'extrémité interne est avantageusement conformée de sorte que pour chacun desdits secteurs de cette paroi, la partie bombée et la partie creuse dudit secteur ont en commun au moins un point de jonction localisé sur la surface fictive précitée.

Cette caractéristique permet d'écarter la présence de reliefs importants entre le fond de la partie creuse et le sommet de la partie bombée de chaque secteur de la paroi d'extrémité interne. Il est en effet préférable que chaque secteur de cette paroi présente une pente progressive et continue entre le fond de sa partie creuse et le sommet de sa partie bombée, afin d'éviter toute discontinuité de la veine d'écoulement du flux primaire.

Dans le mode de réalisation préféré de l'invention, le sommet de la partie bombée de chaque secteur de la paroi d'extrémité interne est écarté axialement du bord aval de ladite paroi d'une distance comprise entre 20% et 40% de la distance axiale entre le bord amont et le bord aval de cette paroi.

D'une manière analogue, le fond de la partie creuse de chaque secteur de la paroi d'extrémité interne est avantageusement écarté axialement du bord amont de ladite paroi d'une distance comprise entre 20% et 40% de la distance axiale entre le bord amont et le bord aval de cette paroi.

Ces caractéristiques préférentielles permettent de limiter les déformations de la paroi d'extrémité interne, du fait de la présence de la partie bombée et de la partie creuse, au voisinage des bords amont et aval de cette paroi d'extrémité interne, de manière à limiter au mieux les perturbations de l'écoulement gazeux au voisinage de ces bords amont et aval, de nature à réduire les performances du rotor.

Par ailleurs, le sommet de la partie bombée et le fond de la partie creuse de chaque secteur de la paroi d'extrémité interne sont de préférence écartés radialement de la surface fictive précitée d'une distance comprise entre 1% et 5% de l'étendue radiale des aubes portées par le disque.

Cette caractéristique permet d'optimiser au mieux les performances du rotor.

L'invention concerne également un compresseur de turbomachine, comprenant un rotor du type décrit ci-dessus, ainsi qu'une turbomachine équipée d'un tel compresseur.

Dans le cas d'un compresseur comprenant plusieurs étages de compression, il est particulièrement avantageux que le rotor du premier de ces étages, lorsque ces derniers sont comptés depuis l'amont, soit du type décrit ci-dessus, dans la mesure où c'est en général dans cet étage amont que les chocs supersoniques sont les plus pénalisants pour les performances du compresseur.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

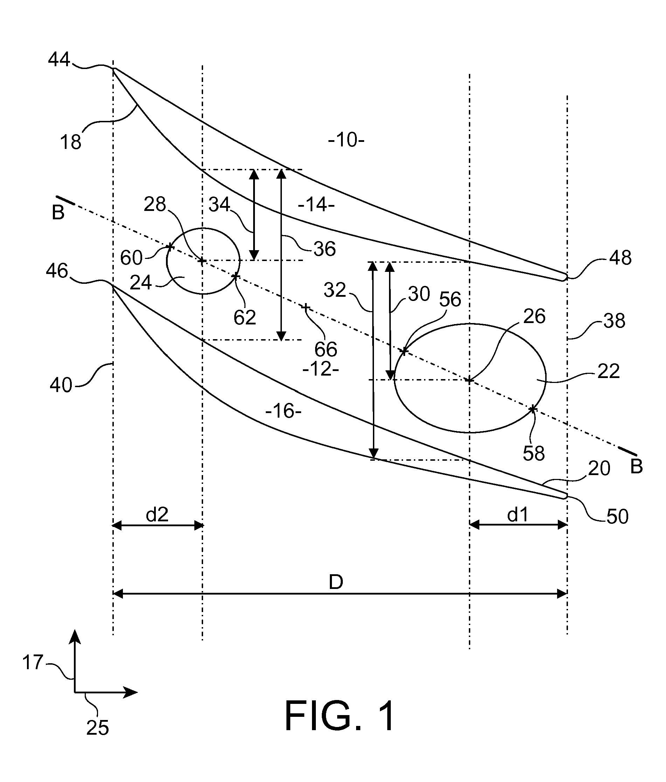

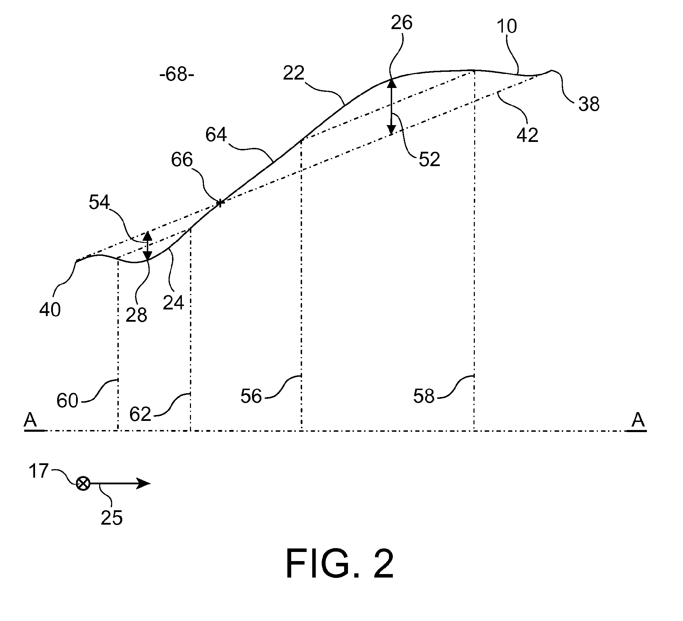

- la figure 1 est une vue schématique partielle d'un secteur angulaire d'une paroi d'extrémité interne d'un étage de rotor selon l'invention, en projection orthogonale sur un plan A-A (figure 2) passant par l'axe du rotor et parallèle à une droite reliant deux points définis par l'intersection de ladite paroi avec respectivement le bord d'attaque des deux aubes délimitant ledit secteur angulaire ;
- la figure 2 est une vue schématique partielle du secteur angulaire de paroi d'extrémité interne de la figure 1, en coupe selon un plan B-B qui passe par le fond d'une partie creuse dudit secteur et par le sommet d'une partie bombée de ce secteur, et qui est perpendiculaire au plan A-A précité.

### EXPOSÉ DÉTAILLÉ D'UN MODE DE RÉALISATION PREFERE

La figure 1 illustre une paroi d'extrémité interne 10 d'un rotor de compresseur selon l'invention, par exemple dans un turboréacteur d'avion, vue en projection orthogonale sur le plan A-A.

Cette paroi d'extrémité interne 10 est formée à la périphérie radialement externe d'un disque aubagé rotatif de ce rotor et délimite intérieurement un canal annulaire d'écoulement d'un flux de gaz au niveau de ce disque de rotor, ce canal étant couramment appelé veine primaire.

La paroi d'extrémité interne 10 peut être formée par des plateformes qui équipent les aubes portées par le disque précité et qui sont agencées bout à bout circonférentiellement, ou cette paroi peut être réalisé d'un seul tenant avec le disque dans le cas où ce disque aubagé est du type monobloc, d'une manière bien connue.

La paroi d'extrémité interne 10 présente une forme globalement tronconique à section s'accroissant de l'amont vers l'aval.

Les aubes portées par le disque délimitent dans la paroi d'extrémité interne 10 une pluralité de secteurs angulaires, tels que le secteur 12 visible sur la figure 1, qui est délimité par deux aubes 14 et 16 du disque précité consécutives selon la direction circonférentielle symbolisée par la flèche 17 sur la figure 1. Plus précisément, le secteur 12 est délimité par la surface d'extrados 18 de l'aube 14 et par la surface d'intrados 20 de l'aube 16.

Sur la figure 1, la paroi d'extrémité interne 10 est représentée en projection orthogonale dans un plan passant par l'axe du rotor et parallèle à la droite reliant d'une part l'intersection de la paroi 10 avec le bord amont, ou bord d'attaque, de l'aube 14 et, d'autre part, l'intersection de la paroi 10 avec le bord amont, ou bord d'attaque, de l'aube 16.

Selon l'invention, chaque secteur 12 de la paroi d'extrémité interne 10 comporte une partie bombée 22, ainsi qu'une partie creuse 24 formée en amont de la partie bombée 22, ces deux parties bombée 22 et creuse 24 étant arbitrairement symbolisées sur la figure 1 par deux ellipses dont la définition apparaîtra plus clairement dans ce qui suit.

La partie bombée 22 est convexe selon la direction axiale, symbolisée par la flèche 25, et selon la direction circonférentielle 17, de sorte qu'elle présente un sommet sensiblement ponctuel 26.

D'une manière analogue, la partie creuse 24 est concave selon la direction axiale et selon la direction circonférentielle de sorte qu'elle présente un fond sensiblement ponctuel 28.

Le sommet 26 de la partie bombée 22 est écarté circonférentiellement de la surface d'extrados 18 de l'aube 14, d'une distance comprise entre 30% et 70% de la distance circonférentielle entre cette surface d'extrados 18 et la surface d'intrados 20 de l'aube 16, mesurée axialement au niveau du sommet 26. L'écartement circonférentiel entre le sommet 26 et la surface d'extrados 18 est symbolisé par la flèche 30 sur la figure 1 en projection sur le plan A-A, tandis que la distance circonférentielle entre les surfaces d'extrados 18 et d'intrados 20 au niveau du sommet 26 est symbolisée par la flèche 32 sur cette figure 1. On notera toutefois que les distances circonférentielles sont des distances angulaires qui diffèrent des distances observables en projection dans le plan A-A.

D'une manière analogue, le fond 28 de la partie creuse 24 est écarté circonférentiellement de la surface d'extrados 18 de l'aube 14, d'une distance comprise entre 30% et 70% de la distance circonférentielle entre cette surface d'extrados 18 et la surface d'intrados 20 de l'aube 16, mesurée axialement au niveau du fond 28. L'écartement circonférentiel entre le fond 28 et la surface d'extrados 18 est symbolisé par la flèche 34 sur la figure 1, tandis que la distance circonférentielle entre les surfaces d'extrados 18 et d'intrados 20 au niveau du fond 28 est symbolisée par la flèche 36 sur cette figure 1.

Cela permet de limiter l'influence des parties bombée 22 et creuse 24 sur l'écoulement de l'air le long des surfaces 18 et 20 des aubes 14 et 16, au voisinage de la paroi d'extrémité interne 10.

Le sommet 26 de la partie bombée 22 est écarté axialement du bord aval 38 de la paroi d'extrémité interne 10 d'une distance d1 comprise entre 20% et 40% de la distance axiale D entre le bord amont 40 et le bord aval 38 de cette paroi 10.

D'une manière analogue, le fond 28 de la partie creuse 24 est écarté axialement du bord amont 40 de la paroi d'extrémité interne 10 d'une distance d2 comprise entre 20% et 40% de la distance axiale entre le bord amont 40 et le bord aval 38 de la paroi 10.

De cette manière, le bord amont 40 et le bord aval 38 de la paroi d'extrémité interne 10 présentent une forme sensiblement circulaire, de nature à améliorer les performances du rotor.

Les parties bombée 22 et creuse 24 peuvent être plus précisément définies par rapport à une surface fictive 42 de révolution autour de l'axe du disque du rotor, et plus précisément de forme tronconique dans le mode de réalisation représenté sur les figures 1 et 2. Cette surface fictive 42 peut être définie par quatre points correspondant à l'intersection de la paroi 10 avec respectivement, d'une part les bords amont 44 et 46 ou bords d'attaque respectifs des deux aubes consécutives 14 et 16 délimitant le secteur 12 de la paroi d'extrémité interne 10, et d'autre part les bords aval 48 et 50 ou bords de fuite de ces aubes.

La surface fictive 42 est illustrée sur la figure 2, qui montre également la paroi d'extrémité interne 10, en coupe sur le plan B-B visible sur la figure 1.

Sur la figure 2, la flèche 52 illustre l'écartement radial du sommet 26 de la partie bombée 22 par rapport à la surface fictive 42. Cet écartement est compris entre 1% et 5% de l'étendue radiale des aubes 14 et 16. D'une manière analogue, la flèche 54 illustre l'écartement radial du fond 28 de la partie creuse 24 par rapport à la surface fictive 42, écartement également compris entre 1% et 5% de l'étendue radiale des aubes. Bien entendu, les écartements radiaux 52 et 54 du sommet 26 et du fond 28 peuvent avoir des valeurs différentes, comme sur la figure 2.

L'ellipse symbolisant la partie bombée 22 sur la figure 1 matérialise les points de cette partie bombée dont l'écartement radial par rapport à la surface fictive 42 est égal à la moitié de l'écartement radial 52 du sommet 26 de cette partie bombée 22 par rapport à la surface fictive 42. Ces points correspondent aux intersections respectives des lignes interrompues 56 et 58 avec la paroi d'extrémité interne 10 dans le plan B-B, sur la figure 2.

D'une manière analogue, l'ellipse symbolisant la partie creuse 24 sur la figure 1 matérialise les points de cette partie creuse dont l'écartement radial par rapport à la surface fictive 42 est égal à la moitié de l'écartement radial 54 du fond 28 de la partie creuse, parmi lesquels se trouvent les points d'intersection de la paroi 10 respectivement avec les lignes interrompues 60 et 62 de la figure 2.

Dans le mode de réalisation représenté sur les figures 1 et 2, les parties bombée 22 et creuse 24 définies par rapport à la surface fictive 42 ont un point de jonction 66 en commun localisé sur cette surface fictive 42. Dans ce mode de réalisation, le point de jonction 66 est en outre localisé dans le plan B-B de la figure 1.

La pente du secteur 12 de la paroi d'extrémité interne 10, définie entre le sommet 26 de la partie bombée 22 de ce secteur 12 et le fond 28 de sa partie creuse 24, permet d'accroître la convergence, de l'amont vers l'aval (flèche 25), du canal annulaire 68 d'écoulement des gaz au niveau du disque du rotor, par rapport à la surface fictive 42 qui correspond sensiblement à une paroi d'extrémité interne de l'art antérieur. Cela permet notamment d'améliorer le taux de compression de ce rotor.

D'une manière générale, la configuration de la paroi d'extrémité interne permet de réduire l'impact du choc supersonique se produisant dans une partie radialement externe des aubes du disque, tout en limitant au mieux l'augmentation du débit admis au niveau de ce disque. A titre indicatif, le rendement énergétique global d'un étage de compression comprenant un rotor associé à un stator peut être amélioré de 0.2% environ avec un rotor selon l'invention.

## Revendications

1. Rotor d'un compresseur de turbomachine, comprenant un disque de rotor qui porte des aubes (14, 16) présentant chacune une surface d'extrados (18) et une surface d'intrados (20), le disque étant pourvu à son extrémité radialement externe d'une paroi (10) formant l'extrémité interne d'un canal annulaire d'écoulement d'un flux primaire de gaz dans la turbomachine, cette paroi (10) étant formée d'une pluralité de secteurs angulaires (12), dont chacun est délimité entre la surface d'extrados (18) d'une première aube (14) et la surface d'intrados (20) d'une seconde aube (16) directement consécutive de ladite première aube (14) selon une direction circonférentielle (17), chacun desdits secteurs (12) comportant une partie bombée (22) convexe selon la direction axiale (25) et selon la direction circonférentielle (17) qui présente un sommet (26) situé radialement à l'extérieur par rapport à une surface fictive (42) de révolution autour de l'axe dudit disque de rotor et passant par quatre points définis par l'intersection de ladite paroi (10) avec respectivement, le bord d'attaque (44, 46) de chacune desdites première et seconde aubes (14, 16), et le bord de fuite (48, 50) de chacune desdites aubes (14, 16), ledit sommet (26) étant écarté circonférentiellement de la surface d'extrados (18) de ladite première aube (14) d'une distance comprise entre 30% et 70% de la distance circonférentielle entre lesdites surfaces d'extrados (18) et d'intrados (20) desdites aubes (14, 16) mesurée au niveau dudit sommet (26), ladite paroi (10) comportant en outre, en amont de ladite partie bombée (22), une partie creuse (24) concave selon la direction axiale (25), ledit rotor étant **caractérisé en ce que** ladite partie creuse (24) est également concave selon la direction circonférentielle (17) et présente un fond (28) sensiblement ponctuel.

2. Rotor selon la revendication 1, **caractérisé en ce que** le fond (28) de ladite partie creuse (24) de chaque secteur (12) de ladite paroi (10) est écarté circonférentiellement de la surface d'extrados (18) de ladite première aube (14) d'une distance comprise entre 30% et 70% de la distance circonférentielle entre lesdites surfaces d'extrados (18) et d'intrados (20) desdites aubes (14, 16) mesurée au niveau dudit fond (28).

3. Rotor selon la revendication 1 ou 2, **caractérisé en ce que** pour chacun desdits secteurs (12) de ladite paroi (10), le fond (28) de ladite partie creuse (24) est situé radialement à l'intérieur par rapport à ladite surface fictive (42).

4. Rotor selon la revendication 3, **caractérisé en ce que** ladite paroi (10) est conformée de sorte que pour chacun desdits secteurs (12) de cette paroi, la partie bombée (22) et la partie creuse (24) dudit secteur ont en commun au moins un point (66) de jonction localisé sur ladite surface fictive (42).

5. Compresseur de turbomachine, **caractérisé en ce qu'**il comprend un rotor selon l'une quelconque des revendications précédentes.

6. Turbomachine, **caractérisée en ce qu'**elle comprend un compresseur selon la revendication 5.

## Patentansprüche

1. Rotor eines Turbomaschinenverdichters, umfassend eine Rotorscheibe, die Schaufeln (14, 16), welche jeweils eine Rückseitenfläche (18) und eine Vorderseitenfläche (20) aufweisen, trägt, wobei die Scheibe an ihrem radial äußeren Ende mit einer Wand (10) versehen ist, die das innere Ende eines ringförmigen Strömungskanals eines primären Gasstroms in der Turbomaschine bildet, wobei diese Wand (10) von einer Vielzahl von Winkelsektoren (12) gebildet ist, von denen ein jeder zwischen der Rückseitenfläche (18) einer ersten Schaufel (14) und der Vorderseitenfläche (20) einer zweiten Schaufel (16), die in einer Umfangsrichtung (17) direkt auf die erste Schaufel (14) folgt, begrenzt ist, wobei ein jeder der Sektoren (12) einen in axialer Richtung (25) und in Umfangsrichtung (17) konvexen bauchigen Teil (22) umfasst, der einen Scheitelpunkt (26) aufweist, welcher in Bezug auf eine fiktive Rotationsfläche (42) um die Achse der Rotorscheibe, die durch vier Punkte verläuft, welche durch die Schnittstelle der Wand (10) mit der Vorderkante (44, 46) einer jeden der ersten und zweiten Schaufeln (14, 16) bzw. mit der Hinterkante (48, 50) einer jeden der Schaufeln (14, 16) definiert sind, radial außerhalb gelegen ist, wobei der Scheitelpunkt (26) umfangsmäßig von der Rückseitenfläche (18) der ersten Schaufel (14) um einen Abstand zwischen 30 % und 70 % des Umfangsabstandes zwischen den Rückseiten- (18) und Vorderseitenflächen (20) der Schaufeln (14, 16), im Bereich des Scheitelpunktes (26) gemessen, entfernt ist, wobei die Wand (10) ferner vor dem bauchigen Teil (22) einen in axialer Richtung (25) konkaven vertieften Teil (24) umfasst, wobei der Rotor **dadurch gekennzeichnet ist, dass** der vertiefte Teil (24) auch in Umfangsrichtung (17) konkav ist und einen im Wesentlichen punktuellen Boden (28) aufweist.

2. Rotor nach Anspruch 1, **dadurch gekennzeichnet, dass** der Boden (28) des vertieften Teils (24) eines jeden Sektors (12) der Wand (10) umfangsmäßig von der Rückseitenfläche (18) der ersten Schaufel (14) um einen Abstand zwischen 30 % und 70 % des Umfangsabstandes zwischen den Rückseiten- (18) und Vorderseitenflächen (20) der Schaufeln (14, 16), im Bereich des Bodens (28) gemessen, entfernt ist.

3. Rotor nach Anspruch 1 oder 2, **dadurch gekennzeichnet, dass** bei jedem der Sektoren (12) der Wand (10) der Boden (28) des vertieften Teils (24) in Bezug auf die fiktive Fläche (42) radial innen gelegen ist.

4. Rotor nach Anspruch 3, **dadurch gekennzeichnet, dass** die Wand (10) derart gestaltet ist, dass bei jedem der Sektoren (12) dieser Wand der bauchige Teil (22) und der vertiefte Teil (24) des Sektors wenigstens einen auf der fiktiven Fläche (42) gelegenen Verbindungspunkt (66) gemein haben.

5. Turbomaschinenverdichter, **dadurch gekennzeichnet, dass** er einen Rotor nach einem der vorhergehenden Ansprüche umfasst.

6. Turbomaschine, **dadurch gekennzeichnet, dass** sie einen Verdichter nach Anspruch 5 umfasst.

## Claims

1. A rotor of a turbomachine compressor, including a rotor disk which holds blades (14, 16) each of which has an extrados surface (18) and an intrados surface (20), where the disk is fitted, at its radially outer end, with a wall (10) forming the inner end of an annular flow channel of a primary gas flow in the turbomachine, where this wall (10) is formed from multiple angular sectors (12), each of which is delimited between the extrados surface (18) of a first blade (14) and the intrados surface (20) of a second blade (16) which follows the said first blade (14) directly in a circumferential direction (17), where each of the said sectors (12) includes a bulging portion (22) which is convex in the axial direction (25) and in the circumferential direction (17) and has an apex (26) located radially outside relative to an imaginary surface (42) of revolution around the axis of the said rotor disk and passing through four points defined by the intersection of the said wall (10) with, respectively, the leading edge (44, 46) of each of the said first and second blades (14, 16), and the trailing edge (48, 50) of each of the said blades (14, 16), where the said apex (26) is separated circumferentially from the extrados surface (18) of the said first blade (14) by a distance of between 30% and 70% of the circumferential distance between the said extrados (18) and intrados (20) surfaces of the said blades (14, 16) measured at the said apex (26), where the said wall (10) also includes, upstream from the said bulging portion (22), a troughed portion (24) concave in the axial direction (25), where the said rotor is **characterised in that** the troughed portion (24) is also concave in the circumferential direction (17) and has a base (28) which is roughly punctiform.

2. A rotor according to claim 1, **characterised in that** the base (28) of the said troughed portion (24) of each sector (12) of the said wall (10) is separated circumferentially from the extrados surface (18) of the said first blade (14) by a distance of between 30% and 70% of the circumferential distance between the said extrados (18) and intrados (20) surfaces of the said blades (14, 16), measured at the said base (28).

3. A rotor according to claim 1 or 2, **characterised in that** for each of the said sectors (12) of the said wall (10), the base (28) of the said troughed portion (24) is located radially inside relative to the said imaginary surface (42).

4. A rotor according to claim 3, **characterised in that** the said wall (10) is shaped such that for each of the said sectors (12) of this wall, the bulging portion (22) and the troughed portion (24) of the said sector have in common at least one point (66) of junction located on the said imaginary surface (42).

5. A turbomachine compressor, **characterised in that** it includes a rotor according to any of the previous claims.

6. A turbomachine, **characterised in that** it includes a compressor according to claim 5.
